# FASCICULE DE BREVET EUROPEEN

(11) **EP 3 698 069 B1**
(45) Date de publication et mention de la délivrance du brevet: **16.06.2021**
(21) Numéro de dépôt: 18796710.4
(22) Date de dépôt: 02.10.2018
(51) Int. Cl.: F16H 57/00, F16H 57/039, F16C 35/073, F16H 57/021, F16H 57/02, F16H 55/36

(54) **BOITIER DE TRANSMISSION ET ENGIN ÉQUIPÉ D'UN TEL BOITIER**
GETRIEBE UND MACHINE MIT EINEM SOLCHEN GETRIEBE
TRANSMISSION AND MACHINE EQUIPPED WITH SUCH A TRANSMISSION

(30) Priorité: 16.10.2017 FR 1759652
(43) Date de publication de la demande: 26.08.2020
(73) Titulaire: France Reducteurs, 85500 Les Herbiers (FR)
(72) Inventeur: BRAY, Sébastien, 85590 Les Epesses (FR); BROSSET, Jean-Luc, 85130 La Verrie (FR)
(74) Mandataire: Ipsilon
(86) Numéro de dépôt international: PCT/FR2018/052422
(87) Numéro de publication internationale: WO 2019/077221

(56) Documents cités:
- DE-A1-102010 040 891
- GB-A- 646 869
- US-A- 5 564 995

## Description

### DOMAINE DE L'INVENTION

L'invention concerne un boîtier de transmission ainsi qu'un engin équipé d'un tel boîtier.

Elle concerne plus particulièrement un boîtier de transmission comprenant un arbre logé au moins partiellement à l'intérieur du boîtier et, montés sur ledit arbre, au moins un élément rotatif et un roulement, le roulement comprenant une bague intérieure et une bague extérieure coaxiales séparées l'une de l'autre par des organes de roulement, le boîtier comprenant en outre un corps tubulaire borgne ou traversant monté sur l'arbre et interposé au moins partiellement entre l'arbre et l'élément rotatif, cet élément rotatif étant monté solidaire en rotation du corps tubulaire.

### ART ANTERIEUR

Un boîtier de transmission du type précité est connu comme l'illustre la figure 1 ou le document US-5.564.995. Dans un tel boîtier, l'arbre est en métal et nécessite un usinage précis pour, d'une part, permettre un positionnement sûr, à l'état ajusté, du roulement sur l'arbre sans quoi il est constaté une usure prématurée des portées du roulement et/ou de l'arbre, d'autre part, immobiliser axialement l'arbre. De même, un autre usinage, tel qu'un perçage, de l'arbre est nécessaire pour un montage solidaire en rotation de l'élément rotatif et de l'arbre. Ces opérations d'usinage sont onéreuses et sources d'erreur.

### BUT ET RESUME

Un but de l'invention est de proposer un boîtier de transmission du type précité dont la conception permet de s'affranchir d'au moins une partie des usinages pratiqués sur l'arbre dans l'art antérieur.

A cet effet, l'invention a pour objet, un boîtier de transmission comprenant un arbre logé au moins partiellement à l'intérieur du boîtier et, montés sur ledit arbre, au moins un élément rotatif et un roulement, le roulement comprenant une bague intérieure et une bague extérieure coaxiales séparées l'une de l'autre par des organes de roulement, le boîtier comprenant en outre un corps tubulaire borgne ou traversant monté sur l'arbre et interposé au moins partiellement entre l'arbre et l'élément rotatif, cet élément rotatif étant monté solidaire en rotation du corps tubulaire, caractérisé en ce que le corps tubulaire est maintenu solidaire en rotation de l'arbre par la bague intérieure, dite constrictive, du roulement, emmanchée à force sur ledit corps tubulaire.

La présence d'un corps tubulaire interposé entre l'arbre et l'élément rotatif d'une part, et le roulement d'autre part, permet de simplifier la conception de l'arbre.

Selon un mode de réalisation de l'invention, l'arbre présente extérieurement, au moins au niveau de sa partie entourée par le roulement, des motifs en creux et/ou en relief.

Ces motifs en creux ou en relief forment des moyens d'accroche entre l'élément tubulaire et l'arbre pour limiter les risques d'un déplacement relatif entre l'arbre et l'élément tubulaire.

Selon un mode de réalisation de l'invention, le roulement est immobilisé axialement à l'intérieur du boîtier.

De préférence, la bague extérieure du roulement est, pour l'immobilisation axiale du roulement à l'intérieur du boîtier, disposée de manière fixe axialement à l'intérieur d'un logement du boîtier.

Selon un mode de réalisation de l'invention, le corps tubulaire est muni à l'une de ses extrémités d'un épaulement périphérique externe apte à former une butée de fin de course d'emmanchement de la bague intérieure du roulement, à l'état emmanché de la bague intérieure du roulement sur le corps tubulaire.

Une telle butée de fin de course forme en outre une butée de limitation en déplacement axial de l'élément tubulaire à l'intérieur du roulement, lorsque l'arbre et l'élément tubulaire sont sollicités en déplacement dans le sens d'une sortie du boîtier

Selon un mode de réalisation de l'invention, l'élément rotatif est une poulie avec deux flasques et un corps, le corps affectant la forme d'un manchon, de préférence borgne, enfilé sur ledit arbre.

Selon un mode de réalisation de l'invention, la bague intérieure du roulement est intercalée entre l'épaulement périphérique externe du corps tubulaire et une extrémité du manchon constitutif du corps de la poulie formant l'élément rotatif.

La bague intérieure peut ainsi être prise en sandwich entre l'épaulement périphérique externe du corps tubulaire et une extrémité du manchon constitutif du corps de la poulie formant l'élément rotatif.

Selon un mode de réalisation de l'invention, le corps, qui affecte la forme d'un manchon borgne, de la poulie constitutive de l'élément rotatif est muni, côté extrémité borgne, d'un perçage axial traversant disposé en correspondance d'un alésage axial du corps tubulaire borgne pour ménager un passage de réception d'un organe, tel qu'une vis, de liaison de l'élément rotatif au corps tubulaire.

L'élément rotatif et le corps tubulaire peuvent donc être solidarisés l'un à l'autre par vissage.

Selon un mode de réalisation, l'élément rotatif et le corps tubulaire sont montés solidaires en rotation par coopération de formes géométriques complémentaires.

De préférence, l'arbre est une vis sans fin en prise avec une roue dentée ou un pignon logé à l'intérieur du boîtier.

L'invention a encore pour objet, un engin caractérisé en ce qu'il est équipé d'un boîtier de transmission conforme à celui décrit ci-dessus.

### DESCRIPTION DES DESSINS

L'invention sera bien comprise à la lecture de la description suivante d'exemples de réalisation, en référence aux dessins annexés dans lesquels :

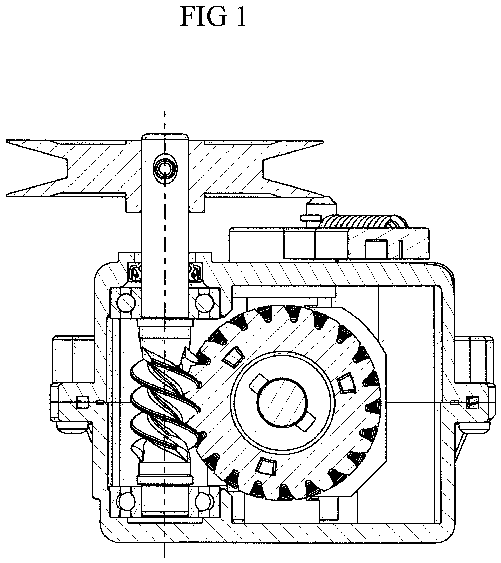

La figure 1 représente une vue en coupe d'un boîtier de transmission conforme à l'état de la technique ;

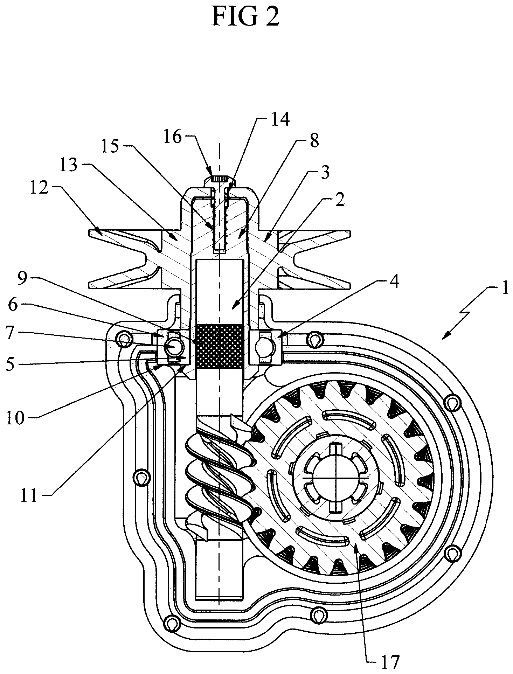

La figure 2 représente une vue en coupe d'un boîtier de transmission conforme à l'invention ;

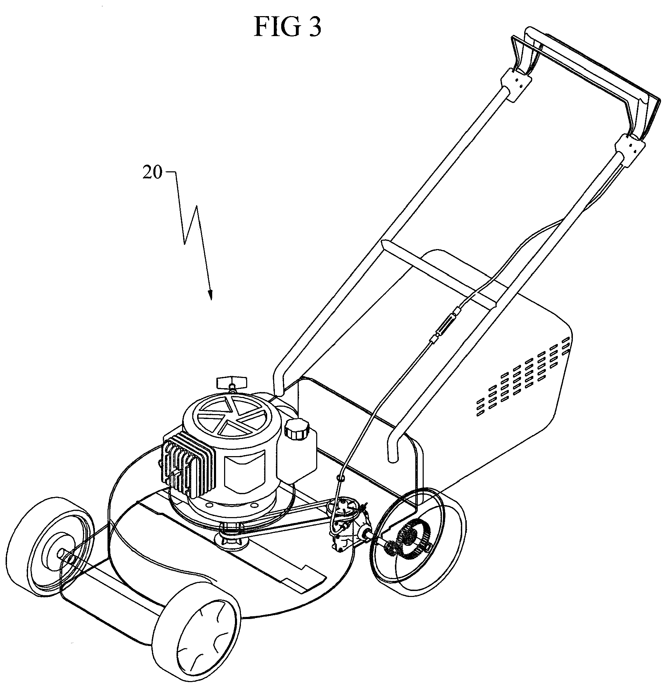

La figure 3 représente une vue en perspective d'un engin équipé d'un boîtier de transmission conforme à l'invention ;

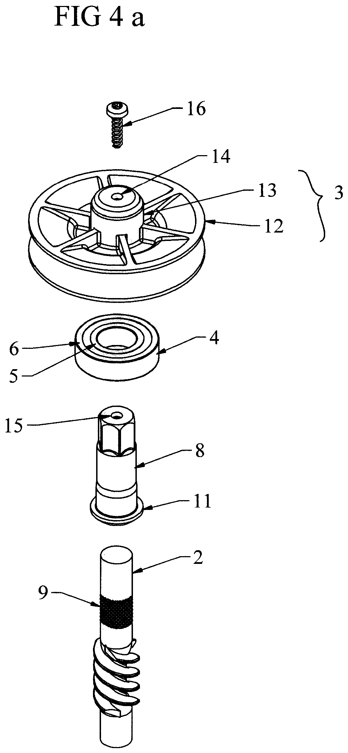

La figure 4a représente une vue en perspective en position éclatée des éléments le constituant de l'ensemble arbre/élément rotatif/corps tubulaire et ;

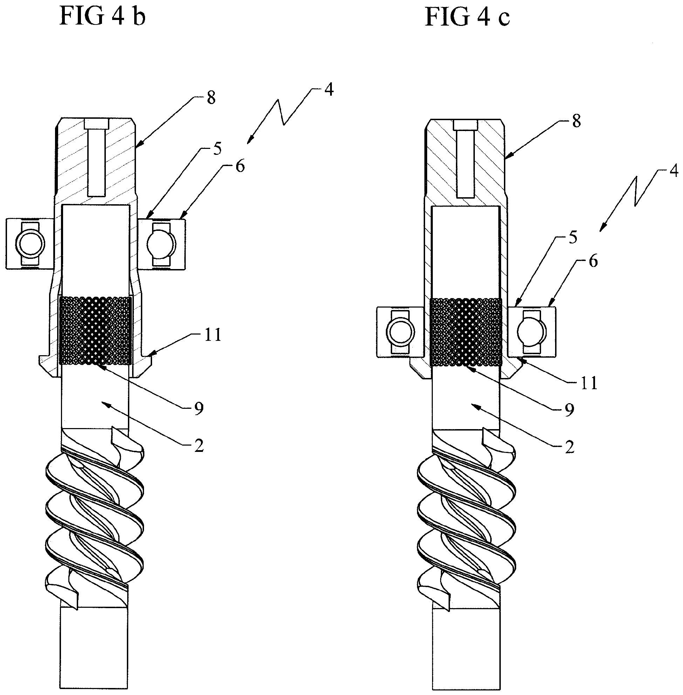

Les figures 4b et 4c représentent, sous forme de vues schématiques en coupe localisées dans la zone de construction, le montage des éléments sur l'arbre ;

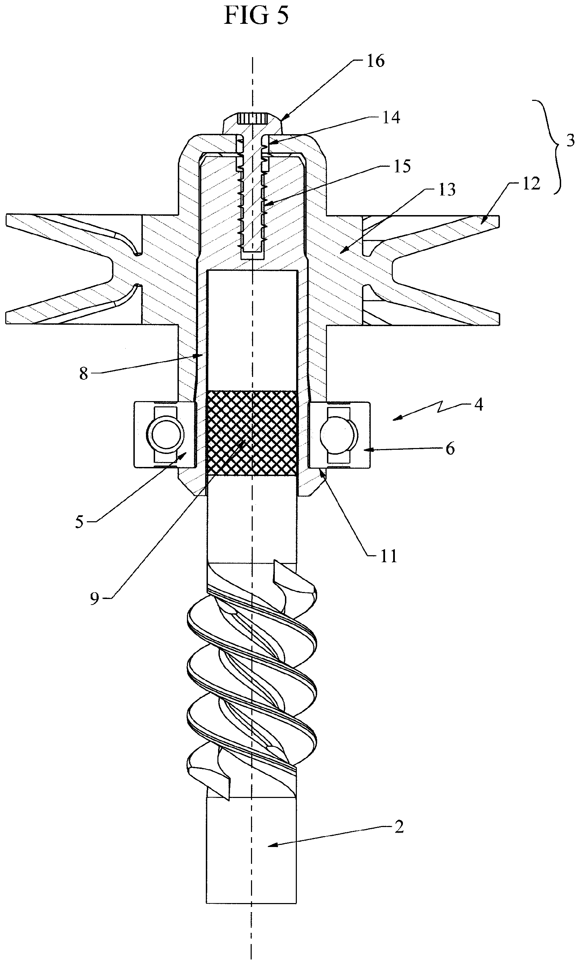

La figure 5 représente une vue en coupe en position assemblée des éléments le constituant de l'ensemble arbre/élément rotatif/corps tubulaire, tel que représenté à la figure 4a.

### DESCRIPTION DETAILLEE

Comme mentionné ci-dessus, l'invention a pour objet un boîtier 1 de transmission.

Dans l'exemple représenté, ce boîtier 1 de transmission est monté sur un engin roulant automoteur, en l'occurrence une tondeuse à gazon.

Ce boîtier 1 de transmission comprend un arbre 2 logé au moins partiellement à l'intérieur du boîtier. Ce boîtier 1 de transmission comprend encore, monté sur ledit arbre 2, un élément 3 rotatif, en l'occurrence dans l'exemple représenté une poulie.

Le mouvement de rotation de la poulie est transmis à l'arbre 2. Cet arbre 2 est un arbre d'entrée formé par une vis sans fin en prise avec une roue dentée 17 logée à l'intérieur du boîtier et montée solidaire en rotation d'un arbre qui forme l'arbre de sortie du boîtier.

Dans l'exemple représenté, cet arbre de sortie forme l'arbre d'entraînement en rotation des roues de l'engin 20.

Le couple vis sans fin/roue dentée aurait pu être remplacé par un couple de pignons coniques, par exemple, sans sortir du champ de l'invention.

L'arbre 2, qui forme l'arbre d'entrée du boîtier 1, comprend donc, montés sur ledit arbre 2, un élément 3 rotatif qui forme une poulie comme mentionné ci-dessus, et un roulement 4. Le roulement 4 est un roulement à billes qui comprend une bague intérieure 5 et une bague extérieure 6 coaxiale séparées l'une de l'autre par des organes 7 de roulement. Les organes 7 de roulement peuvent être des billes, des aiguilles ou tout autre élément équivalent.

Dans l'exemple représenté, le roulement 4 est disposé à l'intérieur du boîtier 1. En particulier ce roulement 4 est immobilisé axialement à l'intérieur du boîtier 1. A cet effet, la bague extérieure 6 du roulement 4 est, pour l'immobilisation axiale du roulement 4 à l'intérieur du boîtier 1, disposée de manière fixe axialement à l'intérieur d'un logement 10 du boîtier 1.

Ce logement 10 se présente ici sous forme d'un logement annulaire.

Le boîtier 1 de transmission comprend encore un corps 8 tubulaire déformable sous l'action d'une pression. Ce corps 8 tubulaire est de préférence en matière de synthèse, en l'occurrence ici en plastique, en particulier en polyamide.

Le corps 8 tubulaire, déformable sous l'action d'une pression exercée par la bague 5 à l'état emmanché de la bague sur ledit corps, présente une capacité à la déformation en compression supérieure à celle de la bague intérieure du roulement et de l'arbre. La matière de synthèse est donc une matière déformable, de préférence élastiquement déformable sous pression.

Ce corps 8 tubulaire est enfilé sur l'arbre 2 et interposé partiellement entre l'élément 3 rotatif et l'arbre 2.

Dans l'exemple représenté, ce corps 8 tubulaire est borgne et est muni, à son extrémité opposée à son extrémité borgne, d'un épaulement 11 périphérique externe dont le rôle sera décrit ci-après. Ce corps 8 tubulaire est également muni, côté extrémité borgne, d'un alésage 15 axial dont le rôle sera décrit ci-après.

Dans l'exemple représenté, le corps 8 tubulaire présente, sur une partie de sa longueur, une forme conique avec la petite base du cône disposée côté extrémité borgne et la grande base du cône disposée côté extrémité opposée, c'est-à-dire côté épaulement 11 périphérique externe du corps 8 tubulaire.

Cette forme conique s'étend depuis l'extrémité munie de l'épaulement 11 périphérique externe du corps 8 en direction de l'extrémité opposée du corps tubulaire au moins au niveau de la partie du corps tubulaire 8 entourée par le roulement 4. En effet, le corps tubulaire 8 est enfilé sur l'arbre 2 et le roulement 4 est lui-même enfilé sur le corps 8 tubulaire, une fois le corps 8 tubulaire en place. Ainsi, le corps 8 tubulaire est maintenu solidaire en rotation de l'arbre 2 et axialement sur l'arbre 2 par la bague intérieure 5 dite constrictive du roulement 4, cette bague intérieure 5 étant emmanchée à force sur le corps 8 tubulaire. La bague 5 intérieure est dite constrictive car elle exerce une pression circulaire sur le corps 8 tubulaire qui lui-même est ainsi plaqué sur l'arbre 2 pour permettre au corps 8 tubulaire de former avec l'arbre 2 un ensemble solidaire en rotation.

Pour parfaire ce montage solidaire en rotation et en translation, l'arbre 2 présente extérieurement, au moins au niveau de sa partie entourée par le roulement 4, des motifs 9 en creux et/ou en relief. Ces motifs 9 en creux et/ou en relief sont réalisés par moletage de l'arbre 2. En l'occurrence, ce moletage, pour lequel aucune précision n'est requise, ménage des rayures à la surface externe de l'arbre 2 et la face interne du corps 8 tubulaire est pressée par la bague intérieure du roulement 4 contre ces rayures assurant ainsi une forte adhérence par contact d'appui entre le corps 8 tubulaire et l'arbre 2.

Dans les exemples représentés, la bague intérieure 5 du roulement 4 est emmanchée à force sur le corps 8 tubulaire jusqu'à venir en appui sur l'épaulement 11 périphérique externe du corps 8 tubulaire.

L'élément 3 rotatif est, quant à lui, une poulie avec deux flasques 12 et un corps 13. Dans l'exemple représenté, les flasques 12 et le corps 13 sont réalisés d'une seule pièce. En variante, il aurait pu être prévu de rapporter au moins l'un des flasques 12 sur le corps 13.

Ce corps 13 affecte la forme d'un manchon enfilé sur l'arbre 2. Dans l'exemple représenté, ce manchon est borgne. A l'état monté du roulement 4 et de l'élément 3 rotatif sur l'arbre 2, la bague intérieure 5 du roulement 4 est intercalée entre l'épaulement 11 périphérique externe du corps 8 tubulaire et une extrémité du manchon constitutive du corps 13 de la poulie formant l'élément 3 rotatif.

Le corps 8 tubulaire borgne est, quant à lui, interposé partiellement entre l'élément 3 rotatif et l'arbre 2 en particulier entre le corps 13, qui affecte la forme d'un manchon, de la poulie et l'arbre 2. Ce corps 8 tubulaire et l'élément 3 rotatif sont montés solidaires en rotation par coopération de formes géométriques complémentaires. A cet effet, le corps 8 tubulaire est muni extérieurement de cannelures axiales aptes à coopérer avec des rainures axiales ménagées sur la face interne du manchon constitutif du corps 13 de la poulie formant l'élément 3 rotatif.

Pour parfaire l'ensemble, l'élément 3 rotatif et le corps 8 tubulaire sont solidarisés l'un à l'autre par vissage. A cet effet, le corps 13, qui affecte la forme d'un manchon borgne, de la poulie constitutive de l'élément 3 rotatif est muni, côté extrémité borgne, d'un perçage 14 traversant disposé en correspondance d'un alésage 15 axial du corps 8 tubulaire borgne pour ménager un passage de réception d'un organe 16 de liaison de l'élément 3 rotatif au corps 8 tubulaire, cet organe 16 de liaison étant ici formé par une vis.

Le montage des différents éléments sur l'arbre 2 s'opère comme suit :
L'arbre 2 ayant été préalablement muni de motifs en creux et/ou en relief sur sa surface externe, par exemple par moletage, le corps 8 tubulaire borgne est enfilé sur l'arbre 2. Le roulement 4 est ensuite emmanché à force sur ledit corps 8 tubulaire. L'emmanchement s'opère, dans l'exemple représenté, de sorte que l'épaulement 11 périphérique externe du corps 8 tubulaire forme une butée de fin de course d'emmanchement de la bague intérieure 5 du roulement 4.

Cette bague 5 intérieure du roulement assure une pression radiale sur le corps 8 tubulaire qui, lui-même, vient ainsi se plaquer sur l'arbre 2, en particulier au niveau de motifs en creux ou en saillie de l'arbre 2. Le corps 8 tubulaire et l'arbre 2 sont désormais solidaires en rotation et en translation.

L'élément 3 rotatif est ensuite enfilé sur l'arbre 2 jusqu'à prise en sandwich de la bague intérieure du roulement 4 entre l'épaulement 11 périphérique externe du corps 8 tubulaire et l'extrémité libre du corps 13 de la poulie formant l'élément 3 rotatif.

Les rainures de l'élément 3 rotatif assurent un montage solidaire en rotation de l'élément 3 rotatif avec le corps 8 tubulaire par coopération desdites rainures avec les cannelures du corps 8 tubulaire.

Enfin, la vis est introduite dans le perçage 14 traversant du corps 13 de la poulie et dans l'alésage 15 de préférence taraudé du corps 8 tubulaire.

Le montage des éléments sur l'arbre 2 est achevé et l'arbre 2 peut être disposé dans le boîtier 1 de sorte que le roulement 4 monté sur l'arbre 2 vienne s'insérer dans un logement du boîtier 1.

On note, qu'à l'état au moins partiellement inséré dans le boîtier 1, l'arbre 2 s'étend parallèlement au plan d'assemblage des coquilles formant à l'état assemblé le boîtier.

## Revendications

1. Boîtier (1) de transmission comprenant un arbre (2) logé au moins partiellement à l'intérieur du boîtier (1) et, montés sur ledit arbre (2), au moins un élément (3) rotatif et un roulement (4), le roulement (4) comprenant une bague intérieure (5) et une bague extérieure (6) coaxiales séparées l'une de l'autre par des organes (7) de roulement, le boîtier (1) comprenant en outre un corps (8) tubulaire borgne ou traversant monté sur l'arbre (2) et interposé au moins partiellement entre l'arbre (2) et l'élément (3) rotatif, cet élément (3) rotatif étant monté solidaire en rotation du corps (8) tubulaire, **caractérisé en ce que** le corps (8) tubulaire est maintenu solidaire en rotation de l'arbre (2) par la bague intérieure (5), dite constrictive, du roulement (4), emmanchée à force sur ledit corps (8) tubulaire.

2. Boîtier (1) de transmission selon la revendication 1, **caractérisé en ce que** l'arbre (2) présente extérieurement, au moins au niveau de sa partie entourée par le roulement (4), des motifs (9) en creux et/ou en relief.

3. Boîtier (1) de transmission selon l'une des revendications 1 ou 2, **caractérisé en ce que** le roulement (4) est immobilisé axialement à l'intérieur du boîtier (1).

4. Boîtier (1) de transmission selon la revendication 3, **caractérisé en ce que** la bague extérieure (6) du roulement (4) est, pour l'immobilisation axiale du roulement (4) à l'intérieur du boîtier (1), disposée de manière fixe axialement à l'intérieur d'un logement (10) du boîtier (1).

5. Boîtier (1) de transmission selon l'une des revendications 1 à 4, **caractérisé en ce que** le corps (8) tubulaire est muni à l'une de ses extrémités d'un épaulement (11) périphérique externe apte à former une butée de fin de course d'emmanchement de la bague intérieure (5) du roulement (4), à l'état emmanché de la bague intérieure (5) du roulement (4) sur le corps (8) tubulaire.

6. Boîtier (1) de transmission selon l'une des revendications 1 à 5, **caractérisé en ce que** l'élément (3) rotatif est une poulie avec deux flasques (12) et un corps (13), le corps (13) affectant la forme d'un manchon, de préférence borgne, enfilé sur ledit arbre (2).

7. Boîtier (1) de transmission selon la revendication 6 prise en combinaison avec la revendication 5, **caractérisé en ce que** la bague intérieure (5) du roulement (4) est intercalée entre l'épaulement (11) périphérique externe du corps (8) tubulaire et une extrémité du manchon constitutif du corps (13) de la poulie formant l'élément (3) rotatif.

8. Boîtier (1) de transmission selon l'une des revendications 6 ou 7, **caractérisé en ce que** le corps (13), qui affecte la forme d'un manchon borgne, de la poulie constitutive de l'élément (3) rotatif est muni, côté extrémité borgne, d'un perçage (14) axial traversant disposé en correspondance d'un alésage (15) axial du corps (8) tubulaire borgne pour ménager un passage de réception d'un organe (16), tel qu'une vis, de liaison de l'élément (3) rotatif au corps (8) tubulaire.

9. Boîtier (1) de transmission selon l'une des revendications 1 à 8, **caractérisé en ce que** l'élément (3) rotatif et le corps (8) tubulaire sont montés solidaires en rotation par coopération de formes géométriques complémentaires.

10. Boîtier (1) de transmission selon l'une des revendications 1 à 9, **caractérisé en ce que** l'arbre (2) est une vis sans fin en prise avec une roue (17) dentée ou un pignon logé à l'intérieur du boîtier (1).

11. Engin (20) **caractérisé en ce qu'**il est équipé d'un boîtier (1) de transmission conforme à l'une des revendications 1 à 10.

## Patentansprüche

1. Getriebegehäuse (1), umfassend eine Welle (2), die mindestens teilweise im Inneren des Gehäuses (1) untergebracht ist und, angebracht auf der Welle (2), mindestens ein Rotationselement (3) und ein Lager (4), wobei das Lager (4) einen inneren Ring (5) und einen äußeren Ring (6) umfasst, die koaxial und voneinander durch Lagerorgane (7) getrennt sind, wobei das Gehäuse (1) ferner einen rohrförmigen Körper (8) umfasst, der nicht durchgängig oder durchgängig ist, der auf der Welle (2) angebracht und mindestens teilweise zwischen der Welle (2) und dem Rotationselement (3) angeordnet ist, wobei dieses Rotationselement (3) mit dem rohrförmigen Körper (8) rotatorisch fest verbunden angebracht ist, **dadurch gekennzeichnet, dass** der rohrförmige Körper (8) mit der Welle (2) durch den konstriktiven inneren Ring (5) des Lagers (4) rotatorisch fest verbunden gehalten wird, der auf dem rohrförmigen Körper (8) aufgepresst ist.

2. Getriebegehäuse (1) nach Anspruch 1, **dadurch gekennzeichnet, dass** die Welle (2) außen mindestens im Bereich ihres von dem Lager (4) umgebenen Teils hohle und/oder Reliefmotive (9) aufweist.

3. Getriebegehäuse (1) nach einem der Ansprüche 1 oder 2, **dadurch gekennzeichnet, dass** das Lager (4) axial im Inneren des Gehäuses (1) arretiert ist.

4. Getriebegehäuse (1) nach Anspruch 3, **dadurch gekennzeichnet, dass** der äußere Ring (6) des Lagers (4) für die axiale Arretierung des Lagers (4) im Inneren des Gehäuses (1) axial fest im Inneren einer Aufnahme (10) des Gehäuses (1) angeordnet ist.

5. Getriebegehäuse (1) nach einem der Ansprüche 1 bis 4, **dadurch gekennzeichnet, dass** der rohrförmige Körper (8) an einem seiner Enden mit einem äußeren Umfangsabsatz (11) ausgestattet ist, der imstande ist, einen Press-Endlagenanschlag für den inneren Ring (5) des Lagers (4) im aufgepressten Zustand des inneren Rings (5) des Lagers (4) auf dem rohrförmigen Körper (8) zu bilden.

6. Getriebegehäuse (1) nach einem der Ansprüche 1 bis 5, **dadurch gekennzeichnet, dass** das Rotationselement (3) eine Rolle mit zwei Flanschen (12) und einem Körper (13) ist, wobei der Körper (13) die Form einer Hülse hat, die vorzugsweise nicht durchgängig ist, die auf die Welle (2) aufgesteckt ist.

7. Getriebegehäuse (1) nach Anspruch 6, herangezogen in Kombination mit Anspruch 5, **dadurch gekennzeichnet, dass** der innere Ring (5) des Lagers (4) zwischen dem äußeren Umfangsabsatz (11) des rohrförmigen Körpers (8) und einem Ende der Hülse als Bestandteil des Körpers (13) der Rolle, die das Rotationselement (3) bildet, angeordnet ist.

8. Getriebegehäuse (1) nach einem der Ansprüche 6 oder 7, **dadurch gekennzeichnet, dass** der Körper (13), der die Form einer nicht durchgängigen Hülse hat, der Rolle als Bestandteil des Rotationselements (3) auf der Seite des nicht durchgängigen Endes mit einem durchgängigen axialen Durchbruch (14) ausgestattet ist, der in Übereinstimmung mit einer axialen Bohrung (15) des nicht durchgängigen rohrförmigen Körpers (8) angeordnet ist, um einen Aufnahmedurchgang für ein Verbindungsorgan (16) wie eine Schraube des Rotationselements (3) am rohrförmigen Körper (8) auszubilden.

9. Getriebegehäuse (1) nach einem der Ansprüche 1 bis 8, **dadurch gekennzeichnet, dass** das Rotationselement (3) und der rohrförmige Körper (8) durch Zusammenwirken komplementärer geometrischer Formen rotatorisch fest verbunden angebracht sind.

10. Getriebegehäuse (1) nach einem der Ansprüche 1 bis 9, **dadurch gekennzeichnet, dass** die Welle (2) eine Schnecke im Eingriff mit einem Zahnrad (17) oder einem Ritzel ist, das im Inneren des Gehäuses (1) untergebracht ist.

11. Fahrzeug (20), **dadurch gekennzeichnet, dass** es mit einem Getriebegehäuse (1) nach einem der Ansprüche 1 bis 10 ausgestattet ist.

## Claims

1. A transmission housing (1) comprising a shaft (2) housed at least partially inside the housing (1) and, mounted on said shaft (2) at least one rotating element (3) and a rolling bearing (4), the rolling bearing (4) comprising an inner ring (5) and an outer ring (6) which are coaxial and which are separated from one another by rolling members (7), the housing (1) further comprising a blind or through tubular body (8) mounted on the shaft (2) and inserted at least partially between the shaft (2) and the rotating element (3), this rotating element (3) being mounted secured in rotation with the tubular body (8), **characterized in that** the tubular body (8) is kept secured in rotation with the shaft (2) by the so-called constrictive inner ring (5) of the rolling bearing (4), forcibly fitted on said tubular body (8).

2. The transmission housing (1) according to claim 1, **characterized in that** the shaft (2) outwardly has, at least at its part surrounded by the rolling bearing (4), hollow and/or raised patterns (9).

3. The transmission housing (1) according to one of claims 1 or 2, **characterized in that** the rolling bearing (4) is axially immobilized inside the housing (1).

4. The transmission housing (1) according to claim 3, **characterized in that** the outer ring (6) of the rolling bearing (4) is, for the axial immobilization of the rolling bearing (4) inside the housing (1), positioned so as to be axially stationary inside a recess (10) of the housing (1).

5. The transmission housing (1) according to one of claims 1 to 4, **characterized in that** the tubular body (8) is provided at one of its ends with an outer peripheral shoulder (11) able to form an end-of-travel stop for fitting of the inner ring (5) of the rolling bearing (4), in the state of the inner ring (5) of the rolling bearing (4) fitted on the tubular body (8).

6. The transmission housing (1) according to one of claims 1 to 5, **characterized in that** the rotating element (3) is a pulley with two flanges (12) and a body (13), the body (13) assuming the form of a sleeve, preferably blind, slipped on said shaft (2).

7. The transmission housing (1) according to claim 6 in combination with claim 5, **characterized in that** the inner ring (5) of the rolling bearing (4) is inserted between the outer peripheral shoulder (11) of the tubular body (8) and an end of the sleeve constituting the body (13) of the pulley forming the rotating element (3).

8. The transmission housing (1) according to one of claims 6 or 7, **characterized in that** the body (13), which assumes the form of a blind sleeve, of the pulley constituting the rotating element (3) is provided, on the blind end side, with an axial through piercing (14) arranged to match an axial bore (15) of the blind tubular body (8) in order to arrange a passage for receiving a member (16), such as a screw, for connecting the rotating element (3) to the tubular body (8).

9. The transmission housing (1) according to one of claims 1 to 8, **characterized in that** the rotating element (3) and the tubular body (8) are mounted secured in rotation by complementary geometric shape cooperation.

10. The transmission housing (1) according to one of claims 1 to 9, **characterized in that** the shaft (2) is a worm engaged with a toothed wheel or a pinion housed inside the housing (1).

11. A vehicle (20), **characterized in that** it is equipped with a transmission housing (1) according to one of claims 1 to 10.
